(19) Europäisches Patentamt
European Patent Office
Office européen des brevets

(11) EP 3 401 986 A1

(12) **EUROPEAN PATENT APPLICATION**
published in accordance with Art. 153(4) EPC

(43) Date of publication:
**14.11.2018 Bulletin 2018/46**

(21) Application number: **17735956.9**

(22) Date of filing: **05.01.2017**

(51) Int Cl.:
***H01M 4/86*** (2006.01) ***H01M 8/16*** (2006.01)

(86) International application number:
**PCT/JP2017/000062**

(87) International publication number:
**WO 2017/119419 (13.07.2017 Gazette 2017/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **06.01.2016 JP 2016000859**

(71) Applicant: **Panasonic Corporation**
**Kadoma-shi, Osaka 571-8501 (JP)**

(72) Inventors:
- **SUZUKI Yuya**
  **Osaka-shi, Osaka 540-6207 (JP)**
- **KAMAI Ryo**
  **Osaka-shi, Osaka 540-6207 (JP)**
- **KURAHATA Kota**
  **Osaka-shi, Osaka 540-6207 (JP)**
- **KITADE Yuuki**
  **Osaka-shi, Osaka 540-6207 (JP)**

(74) Representative: **Müller-Boré & Partner Patentanwälte PartG mbB**
**Friedenheimer Brücke 21**
**80639 München (DE)**

# (54) GAS DIFFUSION ELECTRODE FOR MICROBIAL FUEL CELLS AND MICROBIAL FUEL CELL IN WHICH SAME IS USED

(57) A gas diffusion electrode (10) includes: a water-repellent layer (1) that is formed of a woven fabric or a nonwoven fabric and has water repellency; and an adhesive layer (2) laminated on one surface of the water-repellent layer. Moreover, the gas diffusion electrode includes a gas diffusion layer (3) laminated on a surface of the adhesive layer, the surface being opposite of the surface facing the water-repellent layer. Then, the adhesive layer is non-biodegradable, and is alkali-resistant. A microbial fuel cell (100) includes: a negative electrode (20) that supports microorganisms; an ion-permeable membrane (30) that allows permeation of hydrogen ions; and a positive electrode (40) including the gas diffusion electrode, the positive electrode being separated from the negative electrode via the ion-permeable membrane.

FIG. 1

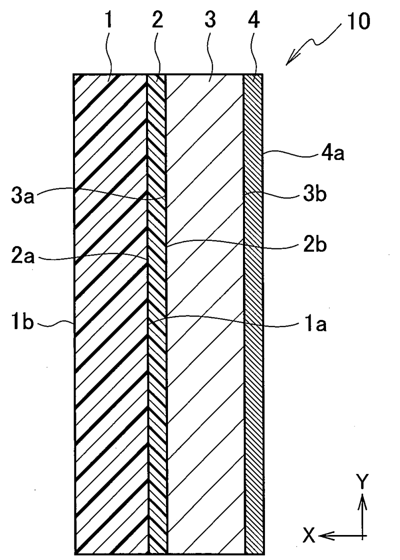


EP 3 401 986 A1

## Description

### TECHNICAL FIELD

The present invention relates to a gas diffusion electrode for microbial fuel cells, and to a microbial fuel cell in which the same is used. More specifically, the present invention relates to a gas diffusion electrode for microbial fuel cells, which is capable of purifying wastewater and generating electrical energy, and to a microbial fuel cell in which the same is used.

### BACKGROUND ART

In recent years, a microbial fuel cell that generates power using biomass as sustainable energy has attracted attention. The microbial fuel cell is a wastewater treatment device that converts chemical energy of organic matter contained in domestic wastewater and industrial wastewater into electrical energy, and meanwhile, treats the organic matter by oxidatively decomposing the same. Then, the microbial fuel cell has features that sludge is generated less, and further, that energy is consumed less. However, power generated by microorganisms is extremely small, and a density of a current to be output is low, and therefore, the microbial fuel cell needs a further improvement.

The microbial fuel cell includes: a negative electrode that carries the microorganisms; and a positive electrode that contacts an electrolysis solution and a gas phase containing oxygen. Then, the microbial fuel cell supplies the negative electrode with the electrolysis solution containing the organic matter and the like, and supplies the positive electrode with such a gas containing oxygen. The negative electrode and the positive electrode are connected to each other via a load circuit, thereby forming a closed circuit. At the negative electrode, hydrogen ions and electrons are generated from the electrolysis solution by a catalytic action of the microorganisms. Then, the generated hydrogen ions move to the positive electrode, and the generated electrons move to the positive electrode via the load circuit. The hydrogen ions and the electrons, which have moved from the negative electrode, are coupled to oxygen at the positive electrode, and are consumed as water. At this time, electrical energy flowing in the closed circuit is recovered.

Here, the positive electrode needs to separate the electrolysis solution and oxygen from each other, and accordingly, is required to have water repellency. Moreover, when water leaks in the positive electrode, current generation power is lowered since a diffusion rate of oxygen is reduced, and therefore, the positive electrode is required to avoid the leakage of water for a long period. As a method for forming a gas diffusion electrode usable for such a positive electrode described above, heretofore, it has been disclosed to form a water-repellent material, which contains a fluorine-containing compound such as polytetrafluoroethylene, on a portion of a gas diffusion electrode base material, which is desired to be subjected to water-repellent treatment (for example, refer to Patent Literature 1). It has been disclosed that, then, the water-repellent material is formed by depositing the fluorine-containing compound by a dry spray method.

### CITATION LIST

### PATENT LITERATURE

Patent Literature 1: Japanese Unexamined Patent Application Publication No. 2005-93167

### SUMMARY OF INVENTION

As mentioned above, in the gas diffusion electrode of Patent Literature 1, powder of the fluorine-containing compound such as polytetrafluoroethylene is deposited by dry spraying. Therefore, cracks and pinholes are prone to occur in the obtained water-repellent material. Particularly when an area of such a gas diffusion electrode as described above is increased, water is prone to leak due to the occurrence of the cracks and the like, and as a result, there has been an apprehension that an output of the fuel cell may be lowered since the diffusion rate of oxygen is significantly reduced.

The present invention has been made in consideration of such a problem as described above, which is inherent in the prior art. Then, it is an object of the present invention to provide a gas diffusion electrode for microbial fuel cells, which is capable of preventing such water leakage from the water-repellent layer and maintaining high output for a long period, and to provide a microbial fuel cell in which same is used.

In order to solve the above problem, a gas diffusion electrode for microbial fuel cells, which is according to a first aspect of the present invention, includes: a water-repellent layer that is formed of a woven fabric or a nonwoven fabric and has water repellency; and an adhesive layer laminated on one surface of the water-repellent layer. The gas diffusion electrode further includes a gas diffusion layer laminated on a surface of the adhesive layer, the surface being opposite of the surface facing the water-repellent layer. Then, the adhesive layer is non-biodegradable, and is alkali-resistant.

A microbial fuel cell according to a second aspect of the present invention includes: a negative electrode that supports microorganisms; an ion-permeable membrane that allows permeation of hydrogen ions; and a positive electrode including a gas diffusion electrode for microbial fuel cells, the positive electrode being separated from the negative electrode via the ion-permeable membrane.

BRIEF DESCRIPTION OF DRAWINGS

[Fig. 1] Fig. 1 is a schematic cross-sectional view showing an example of a gas diffusion electrode according to an embodiment of the present invention.

[Fig. 2] Fig. 2 is a schematic perspective view showing an example of a microbial fuel cell according to the embodiment of the present invention.

[Fig. 3] Fig. 3 is a cross-sectional view taken along a line A-A in Fig. 2.

[Fig. 4] Fig. 4 is an exploded perspective view showing a fuel cell unit in the above microbial fuel cell.

[Fig. 5] Fig. 5 is a graph showing relationships, each of which is between an output density and a number of days elapsed in a microbial fuel cell in which a gas diffusion electrode in each of Example and Comparative examples 1 and 2 is used.

DESCRIPTION OF EMBODIMENTS

Hereinafter, a detailed description will be given of a gas diffusion electrode for microbial fuel cells, which is according to this embodiment, and a microbial fuel cell in which the same is used. Note that dimensional ratios in the drawings are exaggerated for convenience of explanation, and are sometimes different from actual ratios.

[Gas diffusion electrode]

As shown in Fig. 1, a gas diffusion electrode 10 of this embodiment includes: a water-repellent layer 1 that is formed of a woven fabric or a nonwoven fabric and has water repellency; and an adhesive layer 2 laminated on one surface 1a of the water-repellent layer 1. The gas diffusion electrode 10 further includes a gas diffusion layer 3 laminated on a surface 2b of the adhesive layer 2, which is opposite of a surface 2a thereof facing the water-repellent layer.

(Water-repellent layer)

The water-repellent layer 1 has water repellency, and accordingly, separates a gas phase 5 to be described later and an electrolysis solution 70, which is a liquid phase held inside a wastewater tank 80, from each other. Then, the providing of the water-repellent layer 1 makes it possible to prevent the electrolysis solution 70 from moving to the gas phase 5 side. Note that such "separation" as used herein refers to physical blocking.

Moreover, the water-repellent layer 1 is in contact with the gas phase 5 containing oxygen, diffuses a gas in the gas phase 5, and substantially uniformly supplies the gas to a surface 3a of the gas diffusion layer 3. Therefore, it is preferable that the water-repellent layer 1 be a porous body so as to be capable of diffusing the gas. Note that, since the water-repellent layer 1 has water repellency, a decrease of gas diffusibility can be prevented, which may result from the fact that pores of the porous body are closed due to dew condensation and the like. Then, as will be described later, when the gas diffusion electrode 10 is used for a fuel cell, it becomes difficult for the electrolysis solution 70 to penetrate the inside of the water-repellent layer 1, and it becomes easy for the water-repellent layer 1 to contact the gas phase.

It is preferable that the water-repellent layer 1 be formed of a woven fabric or a nonwoven fabric. Moreover, a material that composes the water-repellent layer 1 is not particularly limited as long as having water repellency and being capable of diffusing the gas in the gas phase 5. As the material that composes the water-repellent layer 1, for example, there can be used at least one selected from the group consisting of polyethylene, polypropylene, polybutadiene, nylon, polytetrafluoroethylene, ethyl cellulose, poly-4-methylpentene-1 and butyl rubber. Each of these materials can easily form the porous body, and further, also has high water repellency, and accordingly, can enhance the gas diffusibility by preventing the pores from being closed. Note that, preferably, the water-repellent layer 1 has a plurality of through holes in a lamination direction X of the water-repellent layer 1, the adhesive layer 2 and the gas diffusion layer 3.

In order to enhance the water repellency, the water-repellent layer 1 may be subjected to water-repellent treatment using a water-repellent agent as necessary. Specifically, a water-repellent agent such as polytetrafluoroethylene (PTFE) may be adhered to the porous body that composes the water-repellent layer 1, and may enhance the water repellency thereof.

In order to efficiently supply the gas to the surface 3a of the gas diffusion layer 3, as shown in Fig. 1, it is preferable that the water-repellent layer 1 be joined to the gas diffusion layer 3 via the adhesive layer 2. That is, it is preferable that the surface 1a of the water-repellent layer 1 be joined to the surface 3a of the gas diffusion layer 3, which faces the surface 1a, via the adhesive layer 2. In this way, the diffused gas is directly supplied to the surface 3a of the gas diffusion layer 3, and an oxygen reduction reaction can be carried out efficiently.

(Gas diffusion layer)

The gas diffusion electrode 10 of this embodiment includes the gas diffusion layer 3 having electric conductivity and oxygen permeability. Such providing of such a gas diffusion layer 3 as described above makes it possible to conduct electrons, which are generated by a local cell reaction to be described later, between a catalyst layer 4 and a load circuit 90. That is, as will be described later, an oxygen reduction catalyst is supported on the catalyst layer 4. Therefore, the providing of the gas diffusion layer 3 supplies electrons to the oxygen reduction catalyst from the load circuit 90 through the gas diffusion layer 3, and accordingly, it is made possible to promote the oxygen reduction reaction, which is carried out by oxygen, hydrogen ions and electrons, in the catalyst layer 4.

In order to ensure stable performance, in the gas diffusion electrode 10, it is preferable that oxygen efficiently permeate the water-repellent layer 1 and the gas diffusion layer 3 and be supplied to the oxygen reduction catalyst. Therefore, it is preferable that the gas diffusion layer 3 be a porous body having a large number of pores which oxygen permeates. Moreover, it is particularly preferable that a shape of the gas diffusion layer 3 be three-dimensionally mesh-like. Such a three-dimensional mesh shape makes it possible to impart high oxygen permeability and electric conductivity to the gas diffusion layer 3.

An electrical conductive material that composes the gas diffusion layer 3 is not particularly limited as long as the gas diffusion layer 3 can ensure high electric conductivity. However, it is preferable that the electrical conductive material be made of at least one electrical conductive metal selected from the group consisting of aluminum, copper, stainless steel, nickel and titanium. These electrical conductive metals are provided with high corrosion resistance and electric conductivity, and accordingly, can be suitably used as the material that composes the gas diffusion layer 3.

The electrical conductive material that composes the gas diffusion layer 3 may be a carbon material. As the carbon material, for example, at least one selected from the group consisting of carbon paper, carbon felt, carbon cloth and graphite sheet can be used. Moreover, the electrical conductive material may be composed of one selected from the group consisting of carbon paper, carbon felt, carbon cloth and graphite sheet, and may be a laminated body formed by laminating a plurality of these on one another. Such carbon paper and carbon felt, which are nonwoven fabrics of carbon fiber, such carbon cloth that is a woven fabric of carbon fiber and such a graphite sheet made of graphite have high corrosion resistance and electrical resistivity equal to those of a metal material, and accordingly, it becomes possible to achieve both of durability and electric conductivity.

The graphite sheet mentioned above can be obtained as follows. First, natural graphite is subjected to chemical treatment by acid, and inserts are formed between graphene layers of graphite. Next, this is rapidly heated, whereby expanded graphite is obtained in which spaces between the graphene layers are stretched and expanded by a gas pressure caused by thermal decomposition of such interlayer inserts. Then, this expanded graphite is pressurized and rolled, whereby the graphite sheet is obtained. When the graphite sheet thus obtained is used as the gas diffusion layer 3, since the graphene layers in the graphite are arrayed along a direction Y perpendicular to the lamination direction X, it becomes possible to increase the electric conductivity of the gas diffusion electrode 10 with the load circuit 90, and to further enhance the efficiency of the cell reaction.

(Adhesive layer)

As shown in Fig. 1, the gas diffusion electrode 10 of this embodiment includes the adhesive layer 2 that joins the water-repellent layer 1 and the gas diffusion layer 3 to each other. That is, one surface 1a of the water-repellent layer 1 and the surface 3a of the gas diffusion layer 3, which faces the surface 1a, are joined to each other via the adhesive layer 2. Then, the adhesive layer 2 is non-biodegradable, and is alkali-resistant.

As will be described later, in a microbial fuel cell 100 that uses the gas diffusion electrode 10 as a positive electrode 40, a negative electrode 20, an ion-permeable membrane 30 and the catalyst layer 4 of the positive electrode 40 are immersed into the electrolysis solution 70, and the adhesive layer 2 contacts the electrolysis solution 70. Then, since the adhesive layer 2 contacts microorganisms present in the electrolysis solution 70, the adhesive layer 2 needs to be provided with biodegradation resistance in order to prevent degradation by the microorganisms. Moreover, near the positive electrode 40 in the microbial fuel cell 100, protons are consumed following the oxygen reduction reaction, and pH of the electrolysis solution 70 rises. As a result, the adhesive layer 2 of the positive electrode 40 is exposed to an alkaline environment, and therefore, the adhesive layer 2 needs to be alkali-resistant.

In this embodiment, the adhesive layer 2 is resistant to biodegradation and alkali-resistant, whereby it becomes

possible to maintain adhesive properties between the water-repellent layer 1 and the gas diffusion layer 3 for a long period of time, and to prevent the electrolysis solution 70 from penetrating between the water-repellent layer 1 and the gas diffusion layer 3. Then, peeling between the water-repellent layer 1 and the gas diffusion layer 3 is prevented, whereby the electrolysis solution 70 is prevented from penetrating the inside of the water-repellent layer 1. Accordingly, it becomes possible to prevent water leakage from the water-repellent layer 1 while maintaining high gas permeability of the water-repellent layer 1.

Here, in this description, the phrase "the adhesive layer is non-biodegradable" means that the resin that composes the adhesive layer 2 does not have a molecular structure that becomes a substrate of an extracellular enzyme secreted from microorganisms. Specifically, the phrase means that the resin that composes the adhesive layer 2 does not have a urethane bond shown by Chemical formula 1 or a polyvinyl alcohol structure shown by Chemical formula 2. The microorganisms contained in the electrolysis solution 70 have a function to secrete the extracellular enzyme and to decompose the urethane bond or the polyvinyl alcohol structure. Therefore, it becomes possible to enhance the biodegradation resistance by the fact that the resin that composes the adhesive layer 2 does not have such a molecular structure as above.

[Chem. 1]

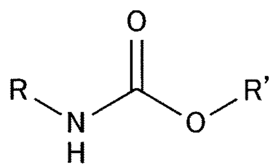

[Chem. 2]

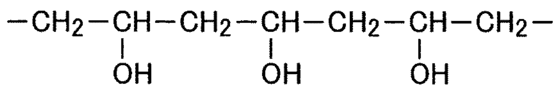

Moreover, in this description, the alkali resistance of the adhesive layer 2 can be measured in accordance with the ASTM standard D543. Specifically, first, from the material that composes the adhesive layer 2, a plate-shaped test piece having a length of 76.2 mm and a width of 25.4 mm is made. Next, the obtained test piece is immersed into a solution at 23±2 °C for 7 days. At this time, an amount of the solution is set to 10 ml or more per 1 $in^2$ of the test piece, and the test piece is suspended in a container, in which the solution is held, so as not to contact a bottom surface and wall surface thereof. Note that the solution in the container is stirred every 24 hours.

Then, a mass, length and thickness of the test piece are measured before and after the immersion, and by mathematical expressions 1 to 3, a mass change rate M (%), a length change rate L (%), and a thickness change rate T (%) are measured. Moreover, also with regard to silicone rubber (one-component RTV silicone rubber KE-3475-T made by Shin-Etsu Chemical Co., Ltd.) as a reference material, a mass change rate M (%), a length change rate L (%), and a thickness change rate T (%) are measured. Then, when each of the mass change rate, length change rate and thickness change rate of the silicone rubber is 1, a material in which all of a mass change rate, a length change rate and a thickness change rate are less than 1 is defined to have alkali resistance.

[Math. 1]

$$M\,(\%) = \frac{|M_2 - M_1|}{M_1} \times 100$$

$M_1$: mass of test piece before immersion; $M_2$: mass of test piece after immersion

[Math. 2]

$$L\,(\%) = \frac{|L_2 - L_1|}{L_1} \times 100$$

$L_1$: longitudinal length of test piece before immersion; $L_2$: longitudinal length of test piece after immersion

$$[\text{Math. 3}] \quad T\,(\%) = \frac{|T_2 - T_1|}{T_1} \times 100$$

$T_1$: thickness of test piece before immersion; $T_2$: thickness of test piece after immersion

It is preferable that the adhesive layer 2 be made of a resin that is non-biodegradable and is alkali-resistant. Specifically, it is preferable that the adhesive layer 2 be made of a resin containing at least one selected from the group consisting of polymethyl methacrylate, methacrylic acid-styrene copolymer, styrene-butadiene rubber, butyl rubber, nitrile rubber and chloroprene rubber. Moreover, it is preferable that the adhesive layer 2 be made of a resin containing at least one selected from the group consisting of polyvinyl chloride, polyvinylidene chloride, polystyrene, styrene-acrylonitrile copolymer, styrene-butadiene-acrylonitrile copolymer, polyethylene, ethylene-vinyl acetate copolymer, polypropylene, polyacetal copolymer, polymethyl methacrylate, polyethylene terephthalate, epoxy resin, ethylene-propylene rubber, chlorosulfonated polyethylene, and ethylene-vinyl acetate rubber.

From a viewpoint of ensuring the adhesive properties between the water-repellent layer 1 and the gas diffusion layer 3, the adhesive layer 2 needs to be provided on at least a part between the water-repellent layer 1 and the gas diffusion layer 3. However, from a viewpoint of increasing the adhesive properties between the water-repellent layer 1 and the gas diffusion layer 3 and preventing the penetration of the electrolysis solution 70 for a long period, it is preferable that the adhesive layer 2 be provided over the entire surface between the water-repellent layer 1 and the gas diffusion layer 3.

(Catalyst layer)

As shown in Fig. 1, it is preferable that the gas diffusion electrode 10 of this embodiment further include the catalyst layer 4 laminated on a surface 3b of the gas diffusion layer 3, which is opposite of the surface 3a facing the adhesive layer 2. The above-mentioned providing of the catalyst layer 4 makes it possible to efficiently perform the oxygen reduction reaction caused by oxygen from the gas phase 5 and the hydrogen ions and the electrons from the negative electrode 20.

It is preferable that the catalyst layer 4 contain the oxygen reduction catalyst. Such containing of the oxygen reduction catalyst makes it possible to further increase a reaction rate of the hydrogen ions and oxygen, which is transferred by the water-repellent layer 1, the adhesive layer 2 and the gas diffusion layer 3.

Here, in the gas diffusion electrode 10 of this embodiment, in order to ensure stable performance, it is preferable that oxygen, which has permeated the water-repellent layer 1, the adhesive layer 2 and the gas diffusion layer 3, be efficiently supplied to the oxygen reduction catalyst. Therefore, it is preferable that the catalyst layer 4 have oxygen permeability, that is, have a large number of air gaps (pores) which enable permeation of oxygen. Moreover, it is preferable that the catalyst layer 4 use a binding agent for binding particles of the oxygen reduction catalyst to one another and forming a porous body. Such a binding agent as described above is not particularly limited as long as the binding agent can bind the particles to one another. As the binding agent, for example, it is preferable to use at least one selected from the group consisting of polytetrafluoroethylene (PTFE), polyvinylidene fluoride (PVDF), and ethylene-propylene-diene copolymer (EPDM).

The oxygen reduction catalyst will be described more in detail. It is preferable that the oxygen reduction catalyst be a carbon-based material doped with metal atoms. The metal atoms are not particularly limited; however, it is preferable that the metal atoms be atoms of at least one type of metal selected from the group consisting of titanium, vanadium, chromium, manganese, iron, cobalt, nickel, copper, zirconium, niobium, molybdenum, ruthenium, rhodium, palladium, silver, hafnium, tantalum, tungsten, rhenium, osmium, iridium, platinum and gold. In this case, the carbon-based material exerts excellent performance particularly as a catalyst for promoting an oxygen reduction reaction. An amount of the metal atoms contained in the carbon-based material may be appropriately set so that the carbon-based material has excellent catalytic performance.

It is preferable that the carbon-based material be further doped with atoms of one or more nonmetals selected from nitrogen, boron, sulfur and phosphorus. An amount of such nonmetal atoms doped into the carbon-based material may also be appropriately set so that the carbon-based material has such excellent catalytic performance.

The carbon-based material is obtained, for example, in such a manner that a carbon-source raw material such as graphite and amorphous carbon is used as a base, and that this carbon-source raw material is doped with the metal atoms and the atoms of the one or more nonmetals selected from nitrogen, boron, sulfur and phosphorus.

Combinations of the metal atoms and the nonmetal atoms, which are doped into the carbon-based material, are appropriately selected. In particular, it is preferable that the nonmetal atoms contain nitrogen, and that the metal atoms contain iron. In this case, the carbon-based material can have particularly excellent catalytic activity. Note that

the nonmetal atoms may be only nitrogen. Moreover, the metal atoms may be only iron.

The nonmetal atoms may contain nitrogen, and the metal atoms may contain at least either one of cobalt and manganese. Also in this case, the carbon-based material can have particularly excellent catalytic activity. Note that the nonmetal atoms may be only nitrogen. Moreover, the metal atoms may be only cobalt, only manganese, or only cobalt and manganese.

The carbon-based material composed as the oxygen reduction catalyst can be prepared as follows. First, a mixture is prepared, which contains a nonmetal compound containing at least one nonmetal selected from the group consisting of nitrogen, boron, sulfur and phosphorus, a metal compound, and the carbon-source raw material. Then, this mixture is heated at a temperature of 800 °C or more to 1000 °C or less for 45 seconds or more and less than 600 seconds. In this way, the carbon-based material composed as the oxygen reduction catalyst can be obtained.

Here, as mentioned above, for example, graphite or amorphous carbon can be used as the carbon-source raw material. Moreover, the metal compound is not particularly limited as long as the metal compound is a compound containing metal atoms capable of coordinate bond with the nonmetal atoms to be doped into the carbon-source raw material. As the metal compound, for example, there can be used at least one selected from the group consisting of: inorganic metal salt such as metal chloride, nitrate, sulfate, bromide, iodide and fluoride; organic metal salt such as acetate; a hydrate of the inorganic metal salt; and a hydrate of the organic metal salt. For example, when the graphite is doped with iron, it is preferable that the metal compound contain iron (III) chloride. Moreover, when the graphite is doped with cobalt, it is preferable that the metal compound contain cobalt chloride. Moreover, when the carbon-source raw material is doped with manganese, it is preferable that the metal compound contain manganese acetate. It is preferable that an amount of use of the metal compound be set so that a ratio of the metal atoms in the metal compound to the carbon-source raw material can stay within a range of 5 to 30 % by mass, and it is more preferable that the amount of use of the metal compound be set so that this ratio can stay within a range of 5 to 20 % by mass.

As described above, it is preferable that the nonmetal compound be a compound of at least one nonmetal selected from the group consisting of nitrogen, boron, sulfur and phosphorus. As the nonmetal compound, for example, there can be used at least one compound selected from the group consisting of pentaethylenehexamine, ethylenediamine, tetraethylenepentamine, triethylenetetramine, ethylenediamine, octylboronic acid, 1,2-bis(diethylphosphino)ethane, triphenyl phosphite, and benzyl disulfide. An amount of use of the nonmetal compound is appropriately set according to a doping amount of the nonmetal atoms into the carbon-source raw material. It is preferable that the amount of use of the nonmetal compound be set so that a molar ratio of the metal atoms in the metal compound and the nonmetal atoms in the nonmetal compound can stay within a range of 1: 1 to 1: 2, and it is more preferable that the amount of use of the nonmetal compound be set so that this molar ratio can stay within a range of 1: 1.5 to 1: 1.8.

The mixture containing the nonmetal compound, the metal compound and the carbon-source raw material in the case of preparing the carbon-based material composed as the oxygen reduction catalyst can be obtained, for example, as follows. First, the carbon-source raw material, the metal compound, and the nonmetal compound are mixed with one another, and as necessary, a solvent such as ethanol is added to an obtained mixture, and a total amount of the mixture is adjusted. These are further dispersed by an ultrasonic dispersion method. Subsequently, after these are heated at an appropriate temperature (for example, 60 °C), the mixture is dried to remove the solvent. In this way, such a mixture containing the nonmetal compound, the metal compound and the carbon-source raw material is obtained.

Next, the obtained mixture is heated, for example, in a reducing atmosphere or an inert gas atmosphere. In this way, the nonmetal atoms are doped into the carbon-source raw material, and the metal atoms are also doped thereinto by the coordinate bond between the nonmetal atoms and the metal atoms. It is preferable that a heating temperature be within a range of 800 °C or more to 1000 °C or less, and it is preferable that a heating time be within a range of 45 seconds or more to less than 600 seconds. Since the heating time is short, the carbon-based material is efficiently produced, and the catalytic activity of the carbon-based material is further increased. Note that, preferably, a heating rate of the mixture at the start of heating in the heat treatment is 50 °C/s or more. Such rapid heating further enhances the catalytic activity of the carbon-based material.

Moreover, the carbon-based material may be further acid-washed. For example, the carbon-based material may be dispersed in pure water for 30 minutes by a homogenizer, and thereafter, the carbon-based material may be placed in 2M sulfuric acid and stirred at 80 °C for 3 hours. In this case, elution of the metal component from the carbon-based material is reduced.

By such a production method, a carbon-based material is obtained, in which contents of such an inactive metal compound and a metal crystal are significantly low, and electric conductivity is high.

As described above, the gas diffusion electrode 10 for microbial fuel cells in this embodiment includes: the water-repellent layer 1 that is formed of a woven fabric or a nonwoven fabric and has water repellency; and the adhesive layer 2 laminated on one surface of the water-repellent layer 1. The gas diffusion electrode 10 further includes the gas diffusion layer 3 laminated on the surface 2b of the adhesive layer 2, which is opposite of the surface 2a facing the water-repellent layer 1. Then, the adhesive layer 2 is non-biodegradable, and is alkali-resistant. The adhesive layer 2 has the biodegradation resistance to the microorganisms present in the electrolysis solution 70, and further, has also the alkali

resistance, and accordingly, maintains the adhesive properties between the water-repellent layer 1 and the gas diffusion layer 3 for a long period. Therefore, the electrolysis solution 70 is prevented from penetrating the inside of the water-repellent layer 1, and accordingly, the water leakage from the water-repellent layer 1 can be prevented for a long period. Moreover, high gas permeability and gas diffusibility of the water-repellent layer 1 can be maintained, and accordingly, it becomes possible to obtain a high output for a long period.

Next, a description will be given of a method for manufacturing the gas diffusion electrode 10 according to this embodiment. If the method for manufacturing the gas diffusion electrode 10 has a step of joining the water-repellent layer 1 and the gas diffusion layer 3 to each other by the adhesive layer 2, then other steps are not particularly limited. For example, first, an adhesive that composes the adhesive layer 2 is applied to the surface 1a of the water-repellent layer 1. A method of this application is not particularly limited, and a method known in public can be used. Then, the surface 3a of the gas diffusion layer 3 is brought into contact with the applied adhesive, and the adhesive is cured after being pressed as necessary, whereby the water-repellent layer 1 and the gas diffusion layer 3 can be joined to each other by the adhesive layer 2. Note that the surface 1a of the water-repellent layer 1 may be brought into contact with the adhesive after applying the adhesive to the surface 3a of the gas diffusion layer 3.

A method for manufacturing the catalyst layer 4 is not particularly limited, and the catalyst layer 4 can be fabricated, for example, as follows. First, the oxygen reduction catalyst and the binding agent are mixed into the solvent, whereby catalyst slurry is prepared. It is preferable to adjust a mixed quantity of the oxygen reduction catalyst and the binding agent appropriately in response to the thickness of the catalyst layer, and the like. Note that the solvent for use in preparing the above slurry is not particularly limited; however, includes water and an alcohol-based solvent such as methanol, ethanol, 1-propanol, 2-propanol, ethylene glycol, and propylene glycol. Moreover, the slurry may be mixed with publicly known surfactant and thickener according to needs.

Next, the catalyst slurry is directly applied to the surface 3b of the gas diffusion layer 3, followed by compression and drying or firing, whereby the catalyst layer 4 can be formed. In this case, the catalyst slurry is directly applied to the gas diffusion layer 3, and accordingly, it becomes possible to increase a contact area between the gas diffusion layer 3 and the catalyst layer 4.

[Microbial fuel cell]

Next, a description will be given of the microbial fuel cell according to this embodiment. As shown in Fig. 2 and Fig. 3, a microbial fuel cell 100 of this embodiment includes: negative electrodes 20 which support microorganisms; ion-permeable membrane 30 which allow permeation of hydrogen ions; and positive electrodes 40 composed of the above-mentioned gas diffusion electrodes 10, each of which is separated from the negative electrode 20 via the ion-permeable membrane 30. Then, in the microbial fuel cell 100, each of the negative electrodes 20 is disposed so as to contact one surface 30a of the ion-permeable membrane 30, and each of the positive electrodes 40 is disposed so as to contact a surface 30b of the ion-permeable membrane 30, which is opposite of the surface 30a.

The negative electrode 20 has a structure in which microorganisms are supported on an electrical conductive sheet having electric conductivity. As the electrical conductive sheet, there can be used at least one selected from the group consisting of a porous electrical conductive sheet, a woven fabric electrical conductive sheet, and a nonwoven fabric electrical conductive sheet. Moreover, the electrical conductive sheet may be a laminated body formed by laminating a plurality of sheets on one another. Such a sheet having a plurality of pores is used as the electrical conductive sheet of the negative electrode 20, whereby it becomes easy for hydrogen ions generated by the local cell reaction to be described later to move in a direction of the ion-permeable membrane 30, and it becomes possible to increase a rate of the oxygen reduction reaction. Moreover, from a viewpoint of enhancing the ion permeability, it is preferable that the electrical conductive sheet of the negative electrode 20 have a space (air gap) continuous in the lamination direction X of the positive electrode 40, the ion-permeable membrane 30 and the negative electrode 20, that is, in a thickness direction of the electrical conductive sheet.

The electrical conductive sheet may be a metal plate having a plurality of through holes in the thickness direction. Therefore, as a material that composes the electrical conductive sheet of the negative electrode 20, for example, there can be used at least one selected from the group consisting of electrical conductive metal such as aluminum, copper, stainless steel, nickel and titanium, carbon paper and carbon felt.

As the electrical conductive sheet of the negative electrode 20, the gas diffusion layer for use in the gas diffusion electrode 10 may be used. Moreover, it is preferable that the negative electrode 20 contain graphite, and further, that the graphene layers in the graphite be arrayed along a plane in a direction YZ perpendicular to the lamination direction X of the positive electrode 40, the ion-permeable membrane 30 and the negative electrode 20. The graphene layers are arrayed as described above, whereby electric conductivity thereof in the direction YZ perpendicular to the lamination direction X is enhanced more than electric conductivity thereof in the lamination direction X. Therefore, it becomes easy to conduct the electrons, which are generated by the local cell reaction of the negative electrode 20, to the load circuit, and it becomes possible to further enhance the efficiency of the cell reaction.

The microorganisms supported on the negative electrode 20 are not particularly limited as long as being microorganisms which decompose organic matter or a compound containing nitrogen in the electrolysis solution 70; however, it is preferable to use anaerobic microorganisms which do not require oxygen for growth thereof. The anaerobic microorganisms do not require air for oxidatively decomposing the organic matter in the electrolysis solution 70. Therefore, electric power required to feed air can be reduced to a large extent. Moreover, since free energy acquired by the microorganisms is small, it becomes possible to reduce an amount of generated sludge.

It is preferable that the anaerobic microorganisms held by the negative electrode 20 be, for example, electricity-producing bacteria having an extracellular electron transfer mechanism. Specific examples of the anaerobic microorganisms include Geobacter bacteria, Shewanella bacteria, Aeromonas bacteria, Geothrix bacteria, and Saccharomyces bacteria.

The negative electrode 20 may hold the anaerobic microorganisms in such a manner that a biofilm containing the anaerobic microorganisms is laminated and fixed to the negative electrode 20 itself. Note that the term "biofilm" generally refers to a three-dimensional structure containing a bacterial population and an extracellular polymeric substance (EPS) produced by the bacterial population. However, the anaerobic microorganisms may be held on the negative electrode 20 without using the biofilm. Moreover, the anaerobic microorganisms may be held not only on the surface of the negative electrode 20 but also in the inside thereof.

The microbial fuel cell 100 of this embodiment includes the ion-permeable membranes 30, each of which allows the permeation of the hydrogen ions. Each of the ion-permeable membranes 30 has a function to allow the permeation of the hydrogen ions generated at the negative electrode 20, and to move the generated hydrogen ions to the positive electrode 40 side. As the ion-permeable membrane 30, an ion exchange membrane using ion exchange resin can be used. As the ion exchange resin, for example, NAFION (registered trademark) made by DuPont Kabushiki Kaisha, and Flemion (registered trademark) and Selemion (registered trademark) made by Asahi Glass Co., Ltd. can be used.

Moreover, as the ion-permeable membrane 30, a porous membrane having pores capable of allowing the permeation of the hydrogen ions may be used. That is, the ion-permeable membrane 30 may be a sheet having a space (air gap) for allowing the hydrogen ions to move between the negative electrode 20 and the positive electrode 40. Therefore, it is preferable that the ion-permeable membrane 30 have at least one selected from the group consisting of a porous sheet, a woven fabric sheet and a nonwoven fabric sheet. Moreover, at least one selected from the group consisting of a glass fiber membrane, a synthetic fiber membrane and a plastic nonwoven fabric can be used for the ion-permeable membrane 30, and the ion-permeable membrane 30 may be a laminated body formed by laminating a plurality of these on one another. Since such a porous sheet has a large number of pores in an inside thereof, it becomes possible for the hydrogen ions to move therethrough with ease. Note that a pore size of the ion-permeable membrane 30 is not particularly limited as long as the hydrogen ions can move from the negative electrode 20 to the positive electrode 40.

The microbial fuel cell 1 00 of this embodiment includes the positive electrodes 40, each of which is composed of the gas diffusion electrode 10 mentioned above. That is, each of the positive electrodes 40 includes: the water-repellent layer 1 that is formed of a woven fabric or a nonwoven fabric and has water repellency; and the adhesive layer 2 laminated on one surface of the water-repellent layer 1. The positive electrode 40 further includes the gas diffusion layer 3 laminated on the surface 2b of the adhesive layer 2, which is opposite of the surface 2a facing the water-repellent layer 1. Then, the ion-permeable membrane 30 is provided on the surface 4a of the catalyst layer 4.

As shown in Fig. 2 and Fig. 3, the microbial fuel cell 100 includes a plurality of membrane electrode assemblies 50, each of which includes the positive electrode 40, the ion-permeable membrane 30 and the negative electrode 20. Moreover, such two membrane electrode assemblies 50 are laminated on each other via a cassette substrate 51 so that the positive electrodes 40 face each other. As shown in Fig. 4, the cassette substrate 51 is a U-shaped frame member that goes along outer peripheral portions of the positive electrodes 40. In the cassette substrate 51, an upper portion is open. That is, the cassette substrate 51 is a frame member in which bottom surfaces of two first columnar members 51a are coupled to each other by a second columnar member 51b. Then, side surfaces 51c of the cassette substrate 51 are joined to outer peripheral portions of surfaces 40a of the positive electrodes 40, which are opposite of the ion-permeable membranes 30, whereby the electrolysis solution 70 can be prevented from leaking to the inside of the cassette substrate 51 from the outer peripheral portions of the positive electrodes 40.

Then, as shown in Fig. 3, a fuel cell unit 60 formed by laminating the two membrane electrode assemblies 50 and the cassette substrate 51 on one another is disposed in an inside of a wastewater tank 80 so that the gas phase 5 communicating with the atmosphere is formed. The electrolysis solution 70 is held in the inside of the wastewater tank 80, and the negative electrodes 20, the ion-permeable membranes 30 and the catalyst layers 4 of the positive electrodes 40 are immersed in the electrolysis solution 70. That is, the water-repellent layers 1, each of which composes the positive electrode 40, are disposed so as to contact a gas containing oxygen, and the catalyst layers 4 are disposed so as to contact the electrolysis solution 70.

As mentioned above, each of the water-repellent layers 1 of the positive electrodes 40 has water repellency. Therefore, the electrolysis solution 70 held in the inside of the wastewater tank 80 and the inside of the cassette substrate

51 are separated from each other, and the gas phase 5 is formed in an inner space formed of the two membrane electrode assemblies 50 and the cassette substrate 51. Then, as shown in Fig. 3, the positive electrodes 40 and the negative electrodes 20 are electrically connected individually to the load circuit 90.

Note that, in Fig. 2 and Fig. 3, in the microbial fuel cell 100, each of the negative electrodes 20 is in contact with one surface 30a of the ion-permeable membrane 30, and each of the positive electrodes 40 is in contact with the surface 30b of the ion-permeable membrane 30, which is opposite of the surface 30a. However, each of the negative electrodes 20 does not always need to be in contact with the surface 30a of the ion-permeable membrane 30. Moreover, each of the positive electrodes 40 does not always need to be in contact with the surface 30b of the ion-permeable membrane 30. As will be described later, the negative electrode 20, the ion-permeable membrane 30 and the positive electrode 40 just need to be disposed so that the hydrogen ions generated at the negative electrode 20 can permeate the ion-permeable membrane 30 and can move to the positive electrode 40. Therefore, a gap may be present between the negative electrode 20 and the ion-permeable membrane 30, and further, a gap may be present between the positive electrode 40 and the ion-permeable membrane 30.

The wastewater tank 80 holds the electrolysis solution 70 in the inside thereof, and may have a configuration through which the electrolysis solution 70 is circulated. For example, as shown in Fig. 2 and Fig. 3, the wastewater tank 80 may be provided with a liquid supply port 81 for supplying the electrolysis solution 70 to the wastewater tank 80 and a liquid discharge port 82 for discharging the treated electrolysis solution 70 from the wastewater tank 80.

Note that, preferably, the wastewater tank 80 is maintained in an anaerobic condition where, for example, molecular oxygen is absent or a concentration of the molecular oxygen is extremely small even if the molecular oxygen is present. In this way, it becomes possible to keep the electrolysis solution 70 in the wastewater tank 80 so that the electrolysis solution 70 hardly contacts oxygen.

Next, a description will be given of a function of the microbial fuel cell 100 according to this embodiment. At the time of operation of the microbial fuel cell 100, the electrolysis solution 70 is supplied to the negative electrode 20, and air (or oxygen) is supplied to the positive electrode 40. The electrolysis solution 70 contains at least the organic matter; however, may further contain a nitrogen-containing compound. The air is continuously supplied through an opening portion provided in an upper portion of the cassette substrate 51. Note that, preferably, the electrolysis solution 70 is also continuously supplied through the liquid supply port 81 and the liquid discharge port 82.

Then, in the positive electrode 40, the air is diffused by the water-repellent layer 1, and oxygen in the air permeates the adhesive layer 2 and the gas diffusion layer 3, and reaches the catalyst layer 4. In the negative electrode 20, hydrogen ions and electrons are generated from the organic matter and/or the nitrogen-containing compound in the electrolysis solution 70 by the catalytic action of the microorganisms. The generated hydrogen ions permeate the ion-permeable membrane 30 and move to the positive electrode 40 side. Moreover, the generated electrons move to the load circuit 90 through the electrical conductive sheet of the negative electrode 20, and further, move from the load circuit 90 through the gas diffusion layer 3 of the positive electrode 40 to the catalyst layer 4. Then, the hydrogen ions and the electrons, which have moved to the catalyst layer 4, are combined with oxygen by an action of the oxygen reduction catalyst in the catalyst layer 4, and are consumed as water. At this time, the load circuit 90 recovers electrical energy flowing in such a closed circuit.

As mentioned above, in the positive electrode 40, the water-repellent layer 1 and the gas diffusion layer 3 are joined to each other by the adhesive layer 2 that is non-biodegradable and alkali-resistant. In this way, it becomes difficult for the adhesive layer 2 to be degraded due to the microorganisms present in the electrolysis solution 70 or to an alkaline atmosphere, and accordingly, the adhesive properties between the water-repellent layer 1 and the gas diffusion layer 3 are maintained for a long period. Therefore, the electrolysis solution 70 is prevented from penetrating the inside of the water-repellent layer 1, and accordingly, the water leakage from the water-repellent layer 1 can be prevented. Moreover, high gas permeability and gas diffusibility of the water-repellent layer 1 can be maintained, and accordingly, it becomes possible to efficiently supply oxygen to the catalyst layer 4, and to obtain a high output for a long period.

Here, for example, each of the negative electrodes 20 according to this embodiment may be modified by electron transfer mediator molecules. Alternatively, the electrolysis solution 70 in the wastewater tank 80 may contain the electron transfer mediator molecules. In this way, the electron transfer from the anaerobic microorganisms to the negative electrode 20 is promoted, and more efficient liquid treatment can be realized.

Specifically, in the metabolic mechanism by the anaerobic microorganisms, electrons are transferred within cells or with terminal electron acceptors. When such mediator molecules are introduced into the electrolysis solution 70, the mediator molecules act as the terminal electron acceptors for metabolism, and deliver the received electrons to the negative electrode 20. As a result, it becomes possible to enhance an oxidative degradation rate of the organic matter and the like in the electrolysis solution 70. The electron transfer mediator molecules as described above are not particularly limited. As the electron transfer mediator molecules as described above, for example, there can be used at least one selected from the group consisting of neutral red, anthraquinone-2,6-disulfonic acid (AQDS), thionine, potassium ferricyanide, and methyl viologen.

Note that the fuel cell unit 60 shown in Fig. 2 and Fig. 3 has a configuration in which the two membrane electrode

assemblies 50 and the cassette substrate 51 are laminated on one another. However, this embodiment is not limited to this configuration. For example, the membrane electrode assembly 50 may be joined only to one side surface 51c of the cassette substrate 51, and other side surface thereof may be sealed by a plate member. Moreover, in the cassette substrate 51 shown in Fig. 2 and Fig. 3, the whole of the upper portion thereof is open; however, the upper portion may be partially open or may not be open as long as it is possible to introduce air (oxygen) into the inside of the cassette substrate 51.

EXAMPLES

Hereinafter, this embodiment will be described more in detail by an example and comparative examples; however, this embodiment is not limited to these examples.

[Example]

First, acrylic resin was applied to one surface of a water-repellent layer made of polyolefin to form an adhesive layer. Thereafter, carbon cloth as a gas diffusion layer was laminated on the water-repellent layer, whereby the carbon cloth was adhered to the water-repellent layer. Note that, as the water-repellent layer made of polyolefin, Tyvek (registered trademark) made by DuPont Kabushiki Kaisha was used. As the acrylic resin, Acrydic (registered trademark) WAL 578 made by DIC Corporation was used. As the carbon cloth, plain-woven cloth with a mass of approximately 140 g/m$^2$ was used.

Next, a mixture of an oxygen reduction catalyst and an ionomer was applied to a surface of the carbon cloth, which is opposite of the adhesive layer, whereby a catalyst layer was formed. At this time, the mixture was applied so that a basis weight of the oxygen reduction catalyst became 2 mg/cm$^2$. Note that, as the ionomer, Aciplex (registered trademark) made by Asahi Kasei Corporation was used. In this way, a gas diffusion electrode of this example was obtained.

Then, a microbial fuel cell was fabricated using a positive electrode composed of the obtained gas diffusion electrode. Specifically, first, a positive electrode, in which an air inlet portion was provided on the water-repellent layer of the gas diffusion electrode mentioned above, and a negative electrode, which was composed of a mesh substrate made of stainless steel, were installed in a wastewater tank. Then, a nonwoven fabric was installed between the positive electrode and the negative electrode, and the wastewater tank was filled with the electrolysis solution so that the electrolysis solution was brought into contact with the positive electrode, the negative electrode and the nonwoven fabric. Note that the electrolysis solution contained organic matter having a total organic carbon (TOC) of 800 mg/L, and further, soil microorganisms were inoculated as an anaerobic microorganisms. Note that an inflow to the wastewater tank was adjusted so that a hydraulic retention time of the electrolysis solution became 24 hours. Then, the positive electrode and the negative electrode were connected to a load circuit, whereby a microbial fuel cell of this example was obtained.

[Comparative example 1]

A gas diffusion electrode of this example was obtained in a similar way to Example except that, as the adhesive layer in the gas diffusion electrode, urethane resin was used in place of the acrylic resin. Note that, as the urethane resin, used was a mixture of Acrydic (registered trademark) 52-666-BA made by DIC Corporation and Takenate (registered trademark) D-160N made by Mitsui Chemicals, Inc., which were mixed in a ratio of 5:2.

Then, in a similar way to Example, a microbial fuel cell of this example was obtained using a positive electrode composed of the obtained gas diffusion electrode.

[Comparative example 2]

A gas diffusion electrode of this example was obtained in a similar way to Example except that, as the adhesive layer in the gas diffusion electrode, silicone resin was used in place of the acrylic resin. Note that, as the silicone resin, one-component RTV silicone rubber KE-3475-T made by Shin-Etsu Chemical Co., Ltd. was used.

Then, in a similar way to Example, a microbial fuel cell of this example was obtained using a positive electrode composed of the obtained gas diffusion electrode.

[Evaluation]

(Output characteristics)

The microbial fuel cells obtained in Example and Comparative examples 1 and 2 were operated for 60 days, and changes in output characteristics of the individual fuel cells were investigated. Evaluation results of the individual

changes are shown in Fig. 5. Outputs of the microbial fuel cells were measured based on the following mathematical expression 4 in such a manner that a potential difference between both ends of the load circuit of each of the microbial fuel cells was measured.

[Math. 4]

$$P = V^2/R$$

(P: output; V: potential difference between both ends of load circuit; R: resistance value of load circuit)

Moreover, the outputs in Example and Comparative examples 1 and 2 were obtained immediately after the outputs were stabled and after the fuel cells were operated for 60 days. Then, the outputs after the fuel cells were operated for 60 days were divided by the outputs immediately after the outputs were stabled, whereby retention rates thereof were obtained. Table 1 shows the outputs immediately after the outputs were stabled, the outputs after the fuel cells were operated for 60 days and the retention rates in Example and Comparative examples 1 and 2.

[Table 1]

| | Output immediately after stabilization (mW) | Output after lapse of 60 days (mW) | Retention rate (%) |
|---|---|---|---|
| Example | 1.8 | 1.6 | 88 |
| Comparative Example 1 | 0.77 | 0.13 | 17 |
| Comparative Example 2 | 1.6 | 0.57 | 35 |

As shown in Fig. 5, in each of Example and Comparative examples, it took approximately a week to start up the microbial fuel cell, and the output thereof was gradually increased. However, retention of the subsequent output differed between Example and Comparative examples.

That is, the microbial fuel cell of Comparative example 1 uses the adhesive layer composed of the urethane resin that is less resistant to biodegradation. It is considered that, therefore, the microorganisms proliferated to decompose the adhesive layer as the microbial fuel cell was being operated, resulting in peeling between the water-repellent layer and the gas diffusion layer. When the peeling occurs, the electrolysis solution enters between the water-repellent layer and the gas diffusion layer, and the diffusion rate of oxygen in the gas phase is reduced. It is considered that, therefore, characteristics of the positive electrode are deteriorated, resulting in drop of the output of the microbial fuel cell. Note that this peeling progresses over time, and accordingly, in the microbial fuel cell of Comparative example 1, the output thereof after the fuel cell was operated for 60 days was reduced more than the output immediately after such stabilization, and an output retention rate is deteriorated.

The microbial fuel cell of Comparative example 2 uses the adhesive layer composed of the silicone resin that is less resistant to alkali. Here, near the positive electrode, protons are consumed following the oxygen reduction reaction, that is, pH rises. It is considered that, since the adhesive layer of the positive electrode is exposed to an alkaline environment as a result, the peeling occurs between the water-repellent layer and the gas diffusion layer. Then, this peeling progresses over time, and accordingly, in the microbial fuel cell of Comparative example 2, the output thereof after the fuel cell was operated for 60 days was reduced more than the output immediately after such stabilization, and an output retention rate is deteriorated.

In contrast, the microbial fuel cell of Example uses the acrylic resin having high biodegradation resistance and alkali resistance. It is considered that such a high output is maintained by preventing the peeling between the water-repellent layer and the gas diffusion layer, the peeling having occurred in Comparative examples 1 and 2.

Moreover, visual observation was carried out for exterior appearances of the gas diffusion electrodes in the microbial fuel cells of Example and Comparative example 1 after both of the microbial fuel cells were operated for 100 days. As a result, in the gas diffusion electrode of Example, only a part of the catalyst layer 4 swelled up and was peeled. In contrast, in the gas diffusion electrode of Comparative example 1, approximately 30 to 40% of the catalyst layer 4 swelled up and was peeled. It is considered that, since the peeling is prevented in the gas diffusion electrode of Example 1 as described above, it becomes difficult for the electrolysis solution to penetrate the inside of the water-repellent layer, and the fuel cell is maintained in the high output state.

Although this embodiment has been described above, this embodiment is not limited to these, and various modifications are possible within the scope of the spirit of this embodiment. Specifically, in the drawings, the negative electrode 20, the ion-permeable membrane 30, the positive electrode 40 and the gas diffusion electrode 10 including

the water-repellent layer 1, the adhesive layer 2, the gas diffusion layer 3 and the catalyst layer 4 are formed into a rectangular shape. However, the shape of these is not particularly limited, and can be arbitrarily changed depending on a size of the fuel cell, desired power generation performance and the like. Moreover, an area of the respective layers can also be arbitrarily changed as long as desired functions can be exerted.

The entire contents of Japanese Patent Application No. 2016-000859 (filed on: January 6, 2016) are incorporated herein by reference.

INDUSTRIAL APPLICABILITY

In accordance with the present invention, the adhesive properties between the adhesive layer and the gas diffusion layer are increased by the predetermined adhesive layer, and therefore, the water leakage from the water-repellent layer can be prevented for a long period. As a result, the microbial fuel cell using the gas diffusion electrode becomes capable of maintaining high output for a long period.

REFERENCE SIGNS LIST

| | |
|---|---|
| 1 | WATER-REPELLENT LAYER |
| 2 | ADHESIVE LAYER |
| 3 | GAS DIFFUSION LAYER |
| 4 | CATALYST LAYER |
| 10 | GAS DIFFUSION ELECTRODE FOR MICROBIAL FUEL CELLS |
| 20 | NEGATIVE ELECTRODE |
| 30 | ION-PERMEABLE MEMBRANE |
| 40 | POSITIVE ELECTRODE |
| 100 | MICROBIAL FUEL CELL |

## Claims

**1.** A gas diffusion electrode for microbial fuel cells, the gas diffusion electrode comprising:

a water-repellent layer that is formed of a woven fabric or a nonwoven fabric and has water repellency;
an adhesive layer laminated on one surface of the water-repellent layer; and
a gas diffusion layer laminated on a surface of the adhesive layer, the surface being opposite of the surface facing the water-repellent layer,
wherein the adhesive layer is non-biodegradable and alkali-resistant.

**2.** The gas diffusion electrode for microbial fuel cells according to claim 1, wherein the adhesive layer is made of a resin containing at least one selected from the group consisting of polymethyl methacrylate, methacrylic acid-styrene copolymer, styrene-butadiene rubber, butyl rubber, nitrile rubber and chloroprene rubber.

**3.** The gas diffusion electrode for microbial fuel cells according to claim 1 or 2, further comprising: a catalyst layer laminated on a surface of the gas diffusion layer, the surface being opposite of a surface facing the adhesive layer.

**4.** A microbial fuel cell comprising:

a negative electrode that supports microorganisms;
an ion-permeable membrane that allows permeation of hydrogen ions; and
a positive electrode comprising the gas diffusion electrode for microbial fuel cells according to any one of claims 1 to 3, the positive electrode being separated from the negative electrode via the ion-permeable membrane.

FIG. 1

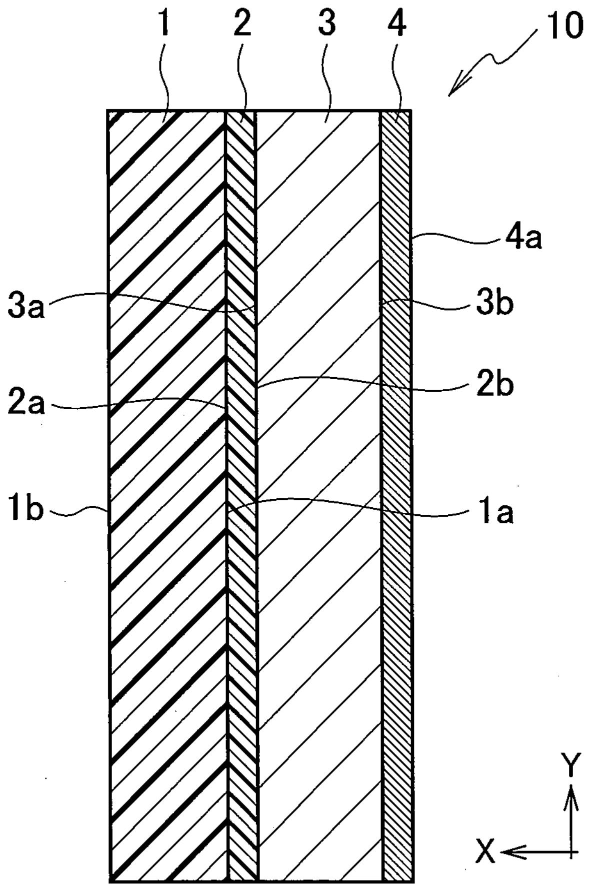

FIG. 2

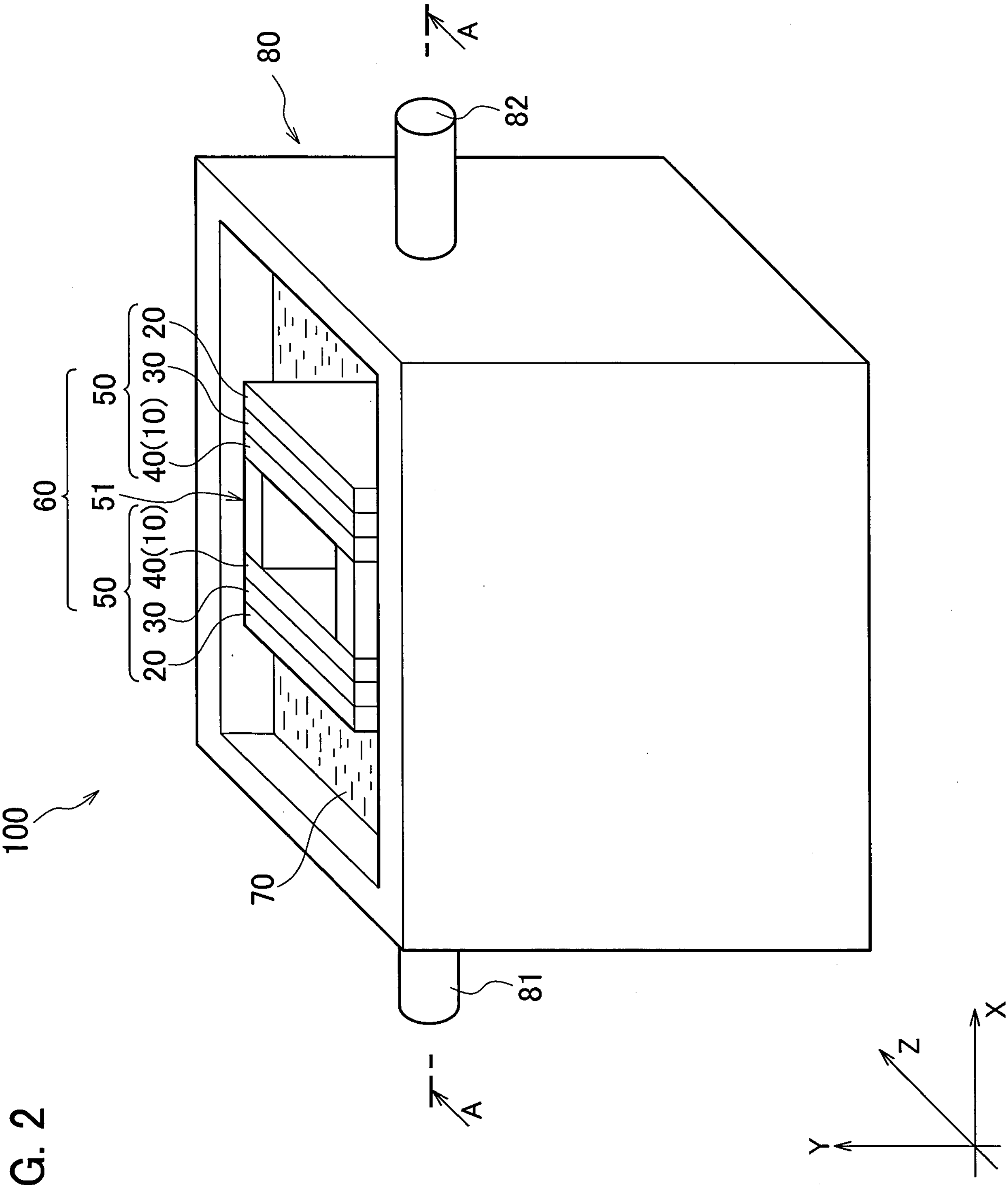

FIG. 3

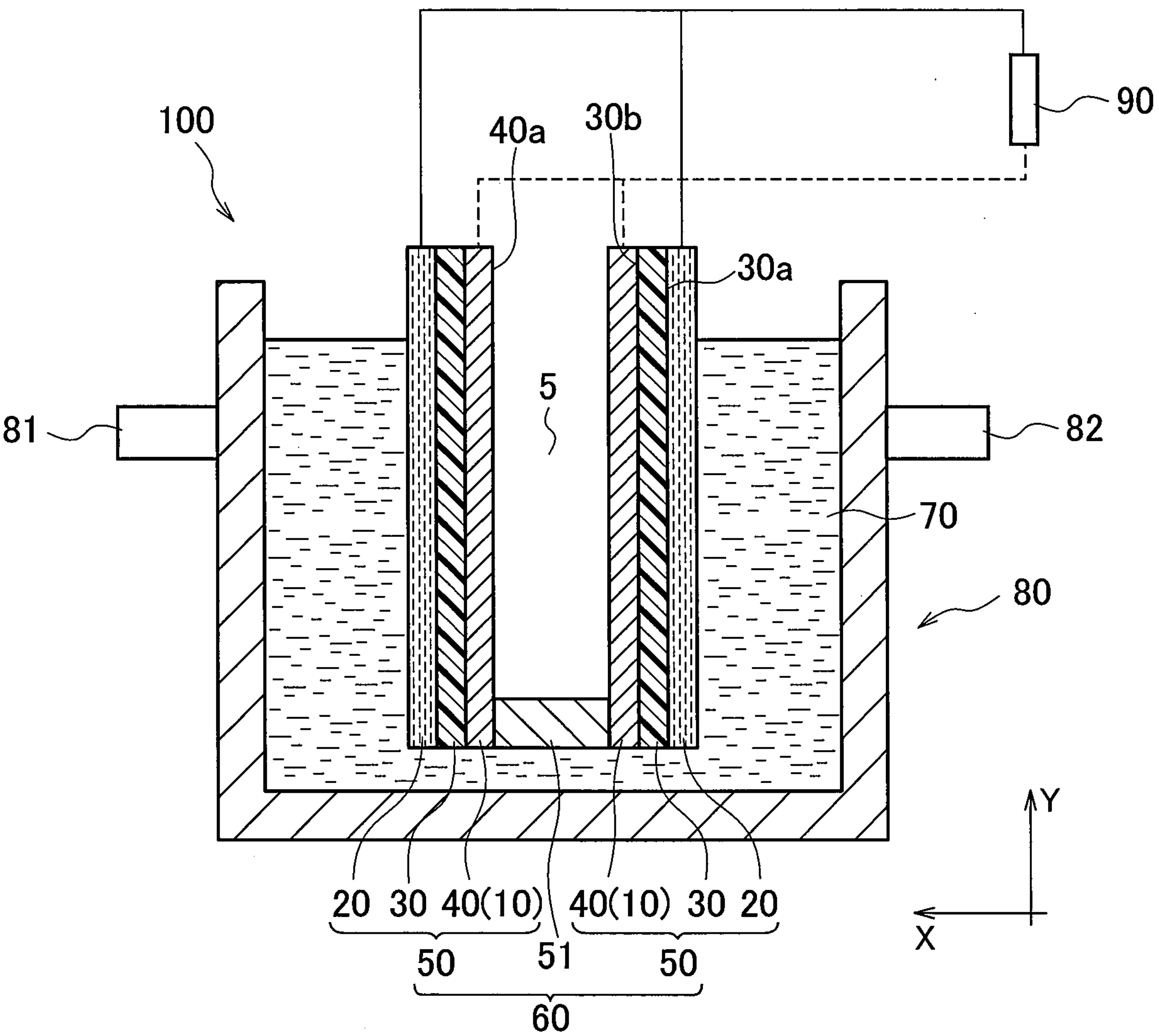

FIG. 4

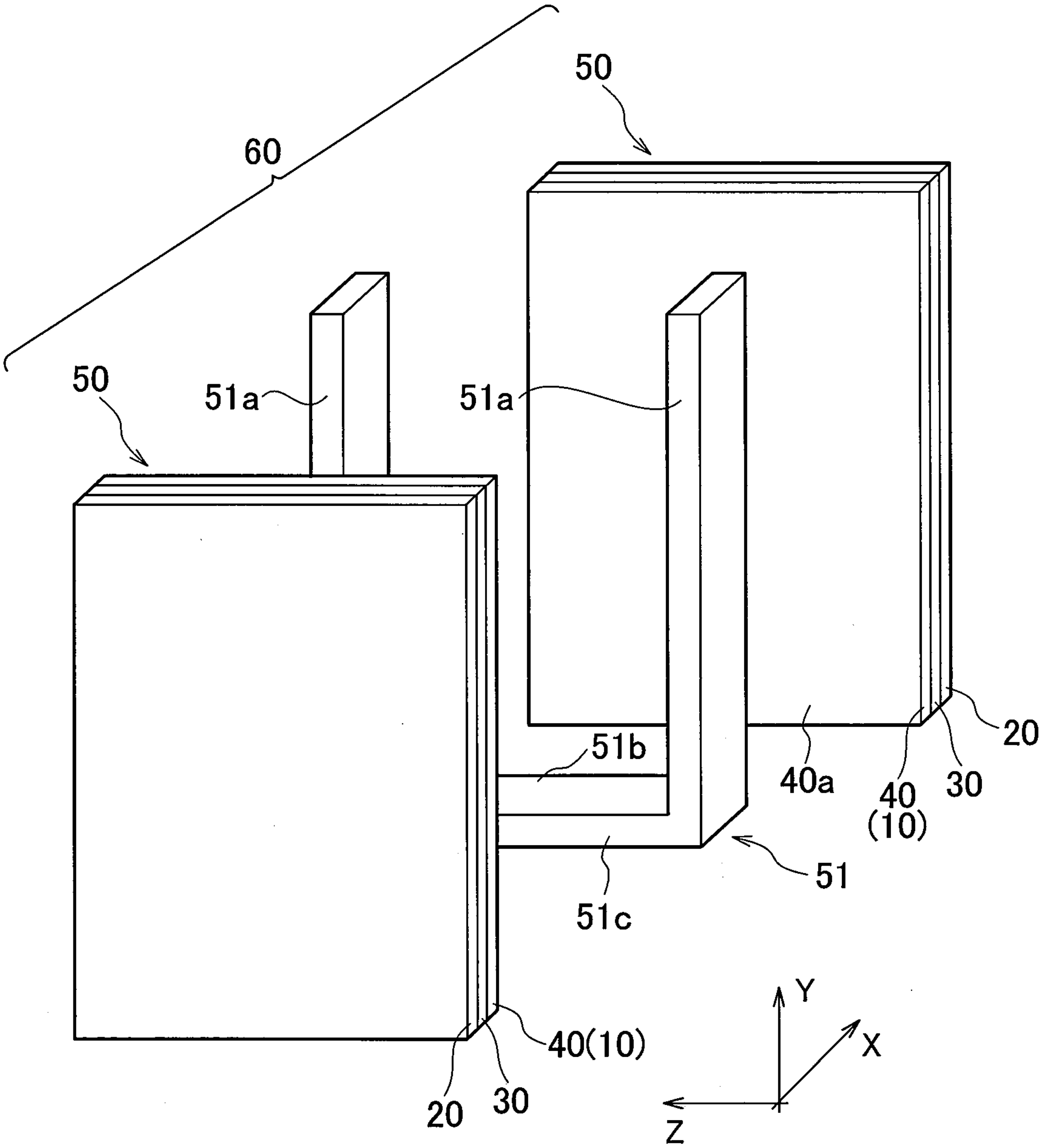

FIG. 5

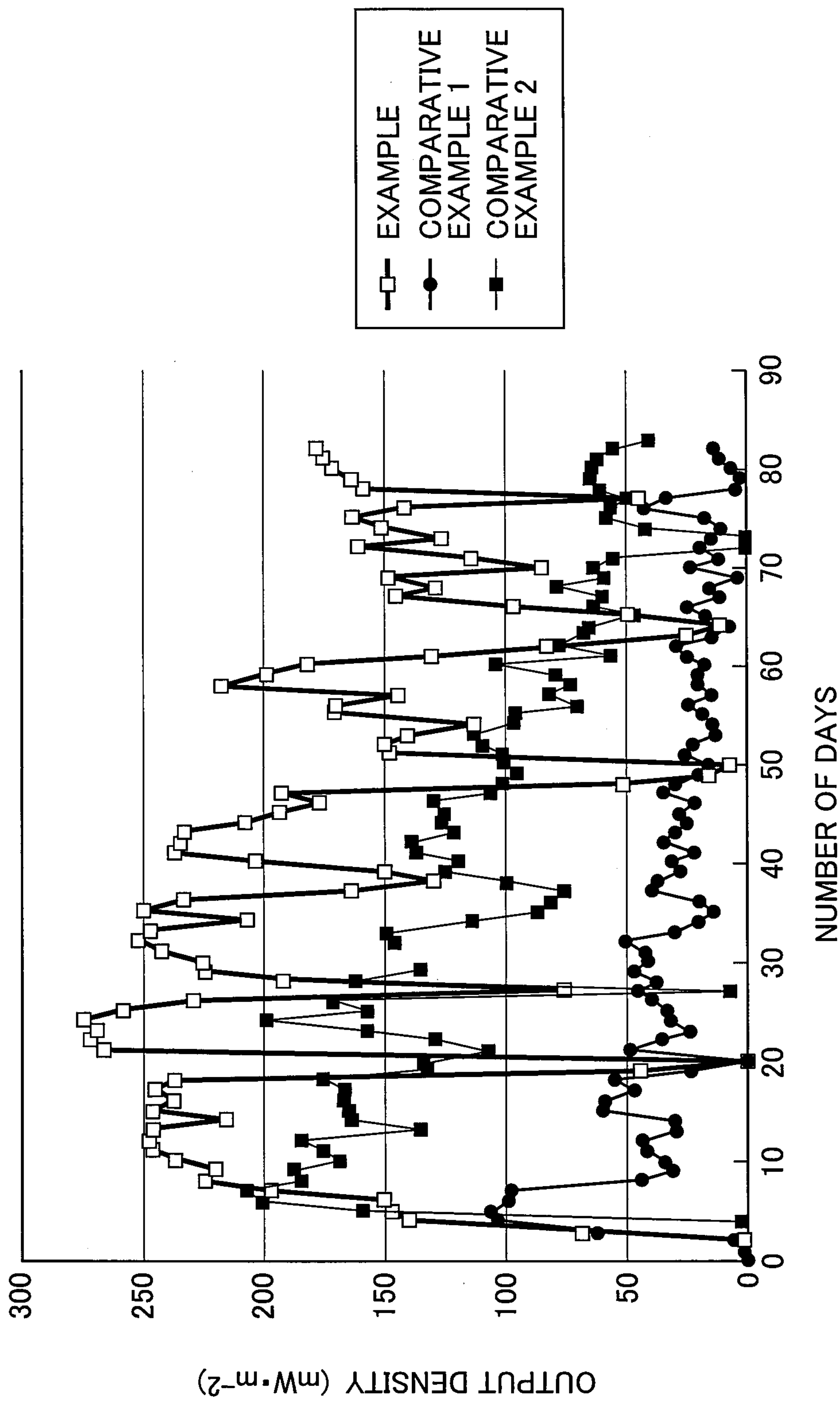
EXAMPLE
COMPARATIVE EXAMPLE 1
COMPARATIVE EXAMPLE 2
OUTPUT DENSITY (mW·m⁻²)
NUMBER OF DAYS
0
50
100
150
200
250
300
0
10
20
30
40
50
60
70
80
90

## INTERNATIONAL SEARCH REPORT

International application No. PCT/JP2017/000062

A. CLASSIFICATION OF SUBJECT MATTER
*H01M4/86*(2006.01)i, *H01M8/16*(2006.01)i

According to International Patent Classification (IPC) or to both national classification and IPC

B. FIELDS SEARCHED

Minimum documentation searched (classification system followed by classification symbols)
H01M4/86, H01M8/16

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2015/198520 A1 (Panasonic Corp.), 30 December 2015 (30.12.2015), (Family: none) | 1-4 |
| A | JP 2015-46361 A (Hitachi, Ltd.), 12 March 2015 (12.03.2015), (Family: none) | 1-4 |
| A | JP 2013-145660 A (Maezawa Kasei Industries Co., Ltd.), 25 July 2013 (25.07.2013), (Family: none) | 1-4 |
| A | JP 2011-65821 A (Kurita Water Industries Ltd.), 31 March 2011 (31.03.2011), (Family: none) | 1-4 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 21 March 2017 (21.03.17) | 28 March 2017 (28.03.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005093167 A
- JP 2016000859 A